# EUROPEAN PATENT APPLICATION

(11) **EP 2 631 375 A1**
(43) Date of publication of application: **28.08.2013**
(21) Application number: 13155465.1
(22) Date of filing: 15.02.2013
(51) Int. Cl.: E03B 7/10, F16K 31/00, F25D 21/14

(54) **Antifreeze device**

(30) Priority: 16.02.2012 LU 91945
(71) Applicant: HTSE S.A., 1724 Luxembourg (LU)
(72) Inventor:
(74) Representative: Lunati & Mazzoni S.r.L.

(57) **Abstract**

It is provided an antifreeze device (1) adapted to become operative depending on the freezing of a fluid, comprising thermosensitive elastic means (52) made of a shape memory material, having an elasticity coefficient (K) varying as a function of the temperature (T), so that, when the temperature (T) is substantially lower than a minimum threshold close to the freezing temperature, the thermosensitive elastic means (52) is in a martensitic crystalline configuration (M) substantially defining a minimum elasticity coefficient, while, when the temperature (T) is substantially higher than a maximum threshold exceeding the freezing temperature, this means is in an austenitic crystalline configuration (A) substantially defining a maximum elasticity coefficient, and, when the temperature (T) is substantially included between said maximum threshold and minimum threshold, the thermosensitive means is in an at least partially rhombohedral crystalline configuration (R) substantially defining an elasticity coefficient greater than the minimum elasticity coefficient.

## Description

The present invention relates to an antifreeze device of the type pointed out in the preamble of the first claim.

In particular, the invention relates to a device adapted to be used for preventing freezing of water or other fluids and consequently the related drawbacks.

It is in fact known that freezing of fluids can bring about different problems connected with their changing of state and the related volume variation or also a merely different mechanical behaviour of the fluids themselves.

The freezing-preventing requirement is particularly felt for aqueous fluids, in which upon temperature changes there is a volume increase.

For instance, a piping plant is usually provided with one or more antifreeze valves that, when the temperature goes below a given value, discharge part of the water contained in the duct to the outside so as to prevent said water from damaging the plant by freezing and consequently expanding.

These valves contemplate the presence of a closure member adapted to close or open a nozzle and of an actuating system that, by moving the closure member based on the temperature, enables water to be discharged to the outside of the plant when the temperature goes below a predetermined threshold value.

The actuating system comprises a spring adapted to press the closure member against the nozzle in such a manner as to inhibit passage of fluid, and a thermal actuator that, when the temperatures goes below a predetermined value, moves the closure member away from the nozzle enabling water discharge.

This thermal actuator consists of an element made of wax and at least one elastic element (a spring, for example) suitably coupled to the fist element in such a manner that, when the temperature goes below said threshold value, it makes the closure member move away from the nozzle therefore giving rise to discharge of water to the outside of the duct.

The known art mentioned above has some important drawbacks.

A first drawback is represented by the fact that antifreeze valves can be only used in environments where the temperature exclusively keeps within a limited range of values.

This problem is due to the thermal actuator that, as the temperature rises, becomes more and more expanded and when the temperature rises too much, its expansion becomes excessive to such an extent that it will exert such a force on the actuator as to cause breaking of the valves.

In an attempt to solve this problem, usually a counterspring or tension spring is arranged so that by countering the action of the thermal actuator, it can compensate for the expansion reducing the force on the closure member and absorbing at least part of the force so that the antifreeze valves are less likely to break.

But not only this solution does not definitively solve the problem, but also makes mounting of the valve more complicated and therefore increases the cost of the valve itself.

In addition, from a construction point of view, it is possible to see that for arrangement of the thermal actuator and the springs a casing made up of a great number of components is required thus involving higher production and assembling costs.

The aforesaid high costs and complicated assemblies are also due to the fact that the thermal actuator, to enable its action to be optimised, must be incorporated into suitable capsules adapted to direct its expansion thereby optimising its action. A further problem resides in that waxes constituting the thermal actuator are obtained through processing of hydrocarbons and therefore are particularly expensive and characterised by a non negligible environmental impact.

Under this situation the technical task underlying the present invention is to conceive an antifreeze device capable of substantially obviating the mentioned drawbacks.

Within the scope of this technical task it is an important aim of the invention to provided an antifreeze device of particularly simple construction and characterised by reduced production costs and purchase prices.

Another important aim of the invention is to conceive a device capable of working at any temperature and therefore usable in any environment.

A further aim of the invention is to produce a device having a reduced environmental impact.

The technical task mentioned and the aims specified are achieved by an antifreeze device as claimed in the appended claim 1.

Preferred embodiments are highlighted in the sub-claims.

The features and advantages of the invention are hereinafter clarified by the detailed description of a preferred embodiment of the invention, with reference to the accompanying drawings, in which:
**Fig. 1** shows a configuration of the antifreeze device according to the invention;
**Fig. 2** is a further configuration of the antifreeze device; and
**Figs. 3 and 4** represent graphs showing a physical feature of one of the components of the antifreeze device.

With reference to the mentioned figures, an antifreeze device according to the invention is generally identified by reference numeral **1.**

It is adapted to be used for preventing freezing of fluids, for example to avoid that, due to freezing of the fluid, breaking of a duct **10** may occur in a fluid-movement system such as a piping plant, i.e. a plant adapted to move a fluid, usually water, so as to make it available for one or more user bases. Alternatively, the antifreeze device 1 is usable in a liquid cooling system adapted to keep the temperature within an interval as much as possible constant, inside a combustion engine, a thermostated chamber, firearms and other technological apparatus such as microprocessors used in electronics.

The antifreeze device 1 therefore is suitable for use, for example, in a cooling plant of a combustion engine, a solar-panel storage plant, a sanitary plant, a watering plant.

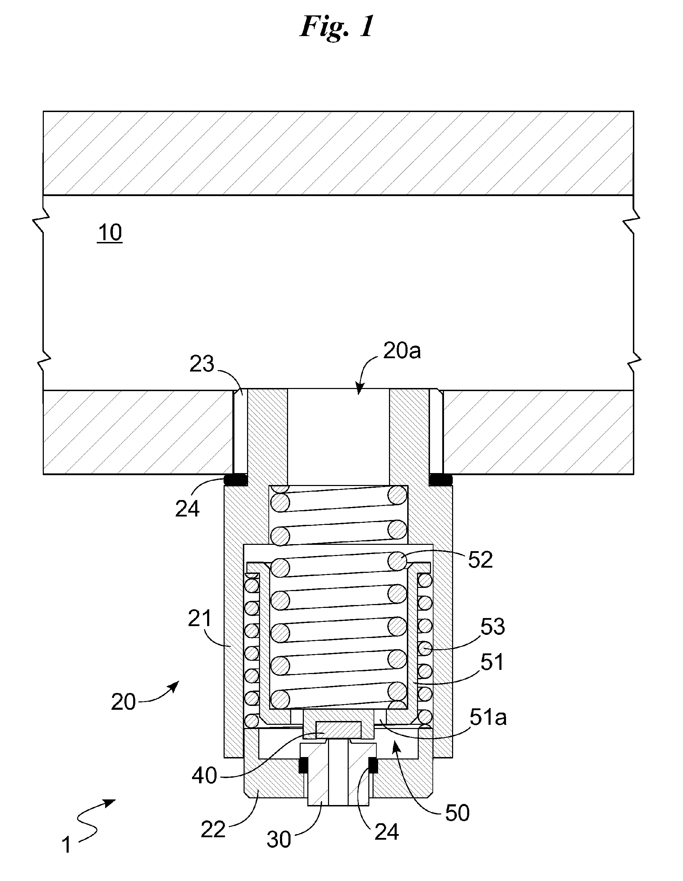

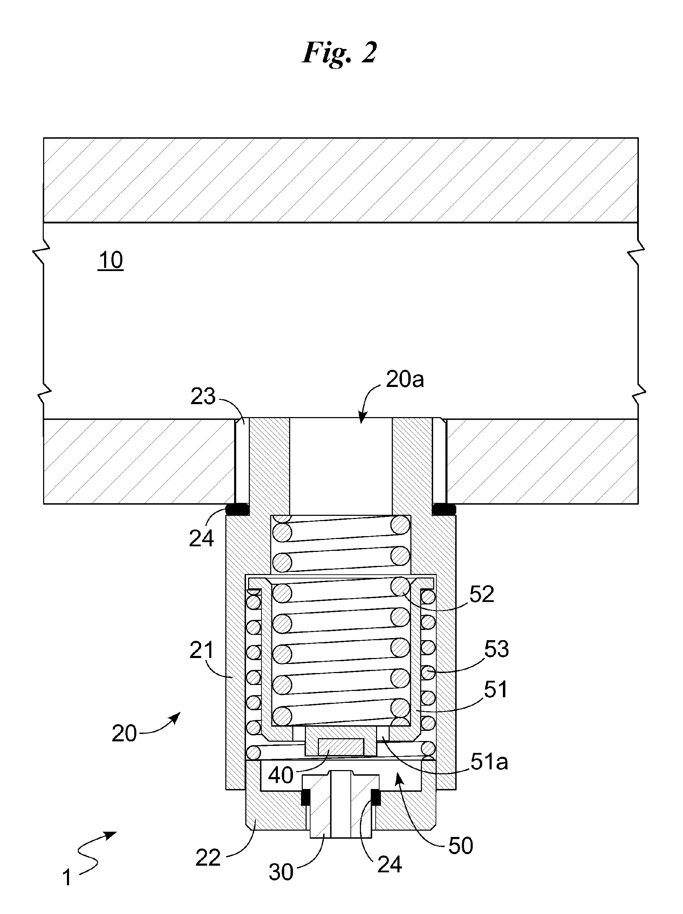

The antifreeze device 1 comprises a main body **20** defining an inner chamber **20a** adapted to be brought into connection for fluid passage with a duct 10, a nozzle **30** for connecting the inner chamber 20a to the outside for fluid passage, a closure member **40** adapted to obstruct nozzle 30 and an actuating system **50** that, depending on the fluid temperature **T,** is adapted to move the closure member 40 relative to nozzle 30 so as to define a closed configuration (Fig. 1) and an open configuration (Fig. 2) of the antifreeze device 1.

The main body 20 comprises a first outer portion **21** adapted to be connected to duct 10, and a second base portion **22** adapted to support nozzle 30 and to be rigidly connected to the first portion 21, so as to define the inner chamber 20a. Preferably, the two portions 21 and 22 are made of polymeric material. In addition, body 20 has connecting members **23** that may consist of threads or other similar members adapted to secure the first portion 21 to duct 10, and one or more O-rings **24** or other sealing elements suitable to avoid undesirable leakage in the junction regions between the first portion 21 and duct 10 and between the second portion 22 and nozzle 30.

Housed inside the main body 20 is the closure member 40 and the actuating system 50.

The actuating system 50 is adapted to move the closure member 40 depending on the temperature T of the fluid so that the antifreeze device 1 moves from the open configuration (F2) in which the closure member 40 is suitably spaced apart from nozzle 30 thus enabling the fluid to get out of the inner chamber 20a, to the closed configuration (Fig. 1) in which the closure member 40 obstructs nozzle 30 inhibiting the fluid from getting out of the inner chamber 20a.

In detail, system 50 determines passage to the open configuration when the temperature T is close to the fluid freezing temperature and passage to the closed configuration when the temperature T is higher than the freezing temperature. In greater detail, should the fluid be water, system 50 determines passage to the open configuration when the temperature T substantially goes down below 3°C and passage to the closed configuration when it substantially exceeds 5°C.

The actuating system 50 comprises a piston **51** rigidly connected to the closure member 40 and provided with holes **51a** adapted to enable the fluid to reach nozzle 30, and two or more elastic means suitable to work in opposition to each other so as to exert two forces on piston 51 at least one of which is varying as a function of the temperature T. The two forces have the same application direction but opposite ways. In particular, in the actuating system it is possible to distinguish thermosensitive elastic means **52** the elasticity coefficient K of which varies as a function of the temperature T and thermo-invariant elastic means **53** characterised by an elasticity coefficient K that is substantially constant on varying of the temperature T. Preferably, the means 52 and 53 consist of expansion springs, i.e. compression springs or traction springs for applying a force as a function of a variation in length. More preferably, means 52 and 53 consist of compression springs.

In particular, these springs and therefore the means 52 and 53 are substantially coaxial, as shown in Figs. 1 and 2. Therefore they have extension directions substantially coincident with each other so as to be able to exert forces having substantially coincident application directions onto piston 51 thereby maximising their action.

In conclusion, means 52 and 53, since they work in opposition and one of them is thermosensitive, are able to determine, as a function of the temperature, an upper threshold in which the device is in the closed configuration, a lower threshold in which the device is in the mostly open configuration, i.e. piston 51 is the maximum distance away from nozzle 30 and therefore device 1 is able to discharge the maximum possible fluid flow, and an intermediate threshold in which the force exerted by the thermosensitive means 52 on piston 51 almost has the same modulus and direction, but opposite way relative to the force exerted on piston 51 by of the thermo-invariant means 53. In detail, the intermediate threshold defines the passage temperature between the closed configuration in which nozzle 30 is closed and the open configuration in which nozzle 30 starts being opened due to the fact that piston 51 is separated from nozzle 30 and, more particularly, is to a smaller distance from nozzle 30 than the aforesaid maximum distance.

To this aim, the thermo-invariant elastic means 53 consists of a spring made of steel or other similar material that, in spite of being submitted to a temperature variation T, keeps the Young's and shear modulus, and consequently the elasticity coefficient K, substantially constant.

On the contrary, the thermosensitive elastic means 52 is made of a shape memory material and therefore have an elasticity coefficient K varying as a function of the temperature T so as to vary the configuration of the antifreeze device 1 on varying of the temperature T and, in particular, to dispose the antifreeze device 1 in the open configuration in the vicinity of the fluid freezing temperatures.

Said ability to vary the elasticity coefficient K is due to the fact that the thermosensitive means 52 being made of a shape memory material has at least two distinct crystalline configurations characterised by different Young's and shear modulus and consequently different elasticity coefficients K. In particular, the thermosensitive elastic means 52 when the temperature T is lower than or equal to a minimum threshold, has a martensitic crystalline configuration **M** adapted to define a minimum elasticity coefficient. More specifically, when the temperature T is substantially lower than a minimum threshold there is a martensitic crystalline configuration, preferably a crystalline configuration of full martensite characterised by the fact that, as the temperature decreases the Young's and shear modulus tend to take minimum values substantially equal to 30 Gpa and 7 Gpa defining said minimum elasticity coefficient K.

On the contrary, when the temperature T is substantially over a maximum threshold, higher than the freezing temperature, said means has an austenitic crystalline temperature **A** adapted to define a maximum elasticity coefficient. More specifically, when the temperature T is substantially higher than the maximum threshold, there is an austenitic crystalline configuration, preferably a crystalline configuration of full austenite so that, as the temperature increases, the Young's and shear modulus tend to take maximum values substantially equal to 70 Gpa and 23 Gpa defining said maximum elasticity coefficient K.

Advantageously, the materials selected for making the thermosensitive elastic means 52 at a temperature T substantially included between the maximum and minimum thresholds, have a rhombohedral crystalline configuration **R** so defined by the particular configuration taken in this temperature range by one of the possible alloys used. In detail, when the temperature T is included between the maximum threshold and the lower one the thermosensitive means 52 can take an at least partly rhombohedral configuration R, as hereinafter described in detail. This at least partly rhombohedral crystalline configuration R is advantageously of the stable type, i.e. a crystalline configuration that, when important stress and deformation changes do not occur, is maintained constant in time.

Said at least partly rhombohedral crystalline configuration R is characterised by an elasticity coefficient K substantially greater than the minimum elasticity coefficient and, in detail, a coefficient substantially varying between the maximum elasticity coefficient belonging to the austenitic configuration A, and the minimum one belonging to the martensitic configuration M

In detail, the at least partly rhombohedral crystalline configuration R enables an intermediate threshold to be defined above which the thermosensitive means 52 takes an intermediate elasticity coefficient between the values of the elasticity coefficient of the A and M configurations and of such a nature that the antifreeze device 1 is in the open configuration. In greater detail, this configuration defines a given threshold above which the thermosensitive means 52 exerts a greater force than the thermo-invariant means 53 giving rise to the closed configuration of device 1 and under which the thermosensitive means 52 exerts a smaller force than the thermo-invariant means 53 giving rise to the open configuration of device 1.

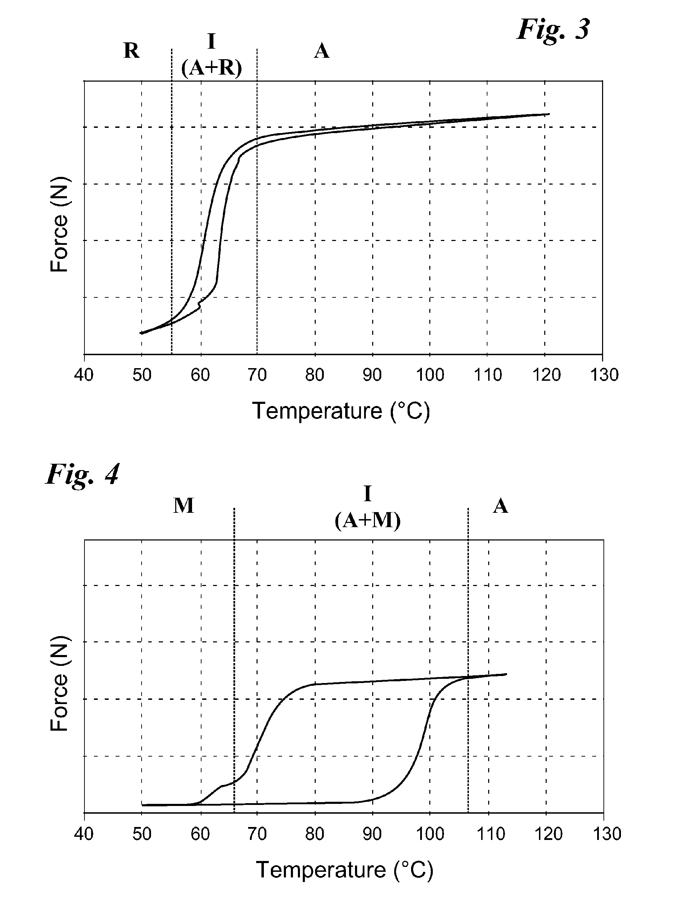

In order to make it clearer how the elasticity coefficient K varies as a function of the temperature T and the type of transformation, graphs of Figs. 3 and 4 are reproduced that show the course of the elasticity coefficient K in the presence of the transformation sequence A→R→A and in the presence of the transformation sequence A→M →A, respectively.

The values of the elasticity coefficients in the two transformation sequences are not comparable but the comparison between the two graphs makes the advantage clear in terms of hysteresis obtained for devices working following the transformation sequence A→R→A. In detail, in Fig. 3 where the transformation sequence A→R→A is shown, on the left-hand side corresponding to the low temperatures it is identified the rhombohedral configuration R in which it is possible to see how the course of the elasticity coefficient K defines a substantially horizontal asymptote corresponding to the minimum elasticity coefficient. On the right-hand side of the graph corresponding to the high temperatures, there is the austenitic configuration A in which it is possible to see how the course of the elasticity coefficient K defines a substantially horizontal asymptote corresponding to the maximum elasticity coefficient K.

Between the A and R configurations there is a partly rhombohedral configuration, i.e. an A+R configuration characterised by a partly rhombohedral and partly austenitic crystalline structure, as shown in the graph in Fig. 3, in which the elasticity coefficient K stably takes a value that is a function of the temperature T and the hysteresis cycle belonging to the shape memory material used and substantially included between the minimum and maximum elasticity coefficients. For the purpose of having the aforesaid three crystalline configurations and, in particular, the minimum threshold lower than or equal to the fluid freezing temperature so as to ensure optimal operation of the device, the shape memory material used for making the thermosensitive elastic means 52 is made up of a binary nickel-titanium alloy characterised by an austenitic face centred cubic configuration A, a martensitic monoclinic configuration M and a rhombohedral configuration R.

Preferably, the binary nickel-titanium alloy is an NiₓTi₁₀₀₋ₓ alloy with X indicating the content, expressed in atomic percent unit, substantially included between 49% and 51 %.

Alternatively, the shape memory material is a ternary nickel-titanium-copper alloy characterised by an austenitic face centred cubic configuration A, a martensitic monoclinic configuration M and an orthorhombic configuration indicated for the sake of clarity as rhombohedral configuration R.

In particular, this ternary nickel-titanium-copper alloy is an Ni_{50-X}Ti₅₀Cu_{X} alloy, with X, indicating the content expressed in atomic percent unit, being substantially included between 5% and 20%.

In addition, these alloys are submitted to specific thermo-mechanical treatments in order to adjust the mechanical response of the thermosensitive elastic means 52 as a function of the temperature T of the fluid conveyed by duct 10 so as to have a minimum threshold lower than or equal to the fluid temperature and to adjust the intermediate threshold in which passage between the two configurations of device 1 occurs, to values appropriate to the fluid. In particular, these alloys can be submitted the heat treatments characterised by treatment temperatures substantially included between 350°C and 650°C over a period of time substantially included between 10 minutes and 60 minutes.

For instance, should fluid be water and device 1 an antifreezing valve, through said heat treatments the combination of the action of the thermosensitive means 52 and the thermo-invariant means 53 identifies an upper threshold substantially equal to 5°C, a lower threshold substantially equal to 0°C and an intermediate threshold substantially equal to 3°C. In particular, means 52 has an austenitic crystalline configuration A when above the upper threshold and an at least partly rhombohedral configuration R (i.e. a rhombohedral configuration R or an austenitic-rhombohedral configuration A+R) when below the lower threshold. When device 1 is used in a liquid cooling plant, the liquid being oil for example, through said heat treatments, the combination of the action of the thermosensitive means 52 and the thermo-invariant means 53 identifies an upper threshold that is substantially equal to or higher than 0°C (corresponding to the closed configuration); a lower threshold (corresponding to the closed configuration) substantially equal to -30°C and an intermediate threshold substantially equal to or lower than -5°C. Alternatively, said lower threshold can be selected in an arbitrary manner, either lower than or equal to -10°C, or lower then or equal to -20°C, in compliance with the operating conditions of the final device.

In particular, in the same manner as in the first example, the thermosensitive means 52 at the upper threshold takes an austenitic configuration A and at the intermediate threshold an at least partly rhombohedral configuration R (i.e. rhombohedral configuration R or an austenitic-rhombohedral configuration A+R).

In detail, as shown from the above two examples, in which the fluid is water or oil, the upper threshold and the maximum threshold can be coincident.

Operation of the antifreeze device 1 described above as to its structure is the following.

First, the antifreeze device 1 is connected to duct 10 through the main body 20 making the fluid fill the inner chamber 20a and therefore causing it to contact the thermosensitive elastic means 52.

In this phase, being temperature T higher than 5°C, i.e. being at the upper threshold typical of water, the thermosensitive elastic means has a high elasticity coefficient K and consequently exerts a greater force than the thermo-invariant elastic means 53 on piston 51 so that said means presses the closure member 40 against nozzle 30 preventing the fluid from coming out and therefore imposes the closed configuration to the antifreeze device 1.

As the temperature T decreases, the material constituting the thermosensitive means 52 varies its crystalline configuration in such a manner that lowering of the elasticity coefficient K of the thermosensitive means 52 and therefore of the force said means exerts is caused.

When the temperature T reaches the intermediate threshold (3°C in case of water), the material constituting the thermosensitive means 52 is in a mixed crystalline configuration made up of an austenitic crystalline configuration A and a rhombohedral configuration R (A+R), the percentages of the two phases varying as a function of temperature. In particular, during this passage there is a variation in the force exerted by the thermosensitive means 52 that has become lower than the force exerted by the thermo-invariant means 53 and causes passage of device 1 to the open configuration.

In detail, the thermo-invariant elastic means 53 exerts a greater force than the thermosensitive means 52 and therefore moves piston 51 moving the closure member 40 away from nozzle 30 and causing at least partial opening of the device and therefore passage to the open configuration of device 1.

At this point nozzle 30 is open and consequently the fluid is free to pass through holes 51a, go beyond piston 51 and come out of the antifreeze device 1 through nozzle 30.

When, due to passage of a fluid at high temperature for example, the temperature T of the thermosensitive means 51 increases, there is an increase in the elasticity coefficient K and in the force exerted by said means. In particular, when the temperature T reaches the upper threshold, the material constituting the thermosensitive means 52 takes the austenitic crystalline configuration A and has such an elasticity coefficient K that the force exerted by the thermosensitive means 52 is higher than that exerted by the thermo-invariant means 53 to an extent sufficient to make the closure member 40 close nozzle 30 and the antifreeze device go back to the closed configuration.

The invention achieves important advantages.

A first important advantage is represented by the high reliability of the antifreeze device 1 and, in particular by the possibility of using the antifreeze device 1 under any condition and, more specifically, at any temperature T.

In fact, the thermosensitive elastic means 5 is advantageously characterised by the fact that, both to the high and low temperatures and more specifically under the maximum threshold and the minimum threshold (as shown in Figs. 3 and 4), the elasticity coefficient K has an asymptotic course so as to define a maximum elasticity coefficient K and a minimum elasticity coefficient K for the thermosensitive means 52.

In detail, this aspect enables the force exerted by the elastic means 52 to be contained within a well defined range of values so that arising of particularly high forces is avoided, which high forces, as it happens with heat actuators typical of known valves, could involve breaking of the antifreeze device 1.

Another advantage connected with the particular course of the elasticity coefficient K of the thermosensitive elastic means made of a shape memory material therefore resides in the possibility of making the main body 20 of a polymeric material or other material that is not characterised by high strength and therefore high costs.

A further important advantage, above all resulting from the particular alloys used and the heat treatments to which the thermosensitive means 52 is submitted, is represented by the presence of the stable rhombohedral crystalline configuration R enabling accomplishment of an optimal antifreeze device 1 for piping plants suitable for water movement.

In particular, the thermosensitive means 52, due to the particular material used and the heat treatments to which it is submitted, is able both to work within an optimal temperature range substantially included between 3°C and 5°C and to have an appropriate elasticity coefficient. More particularly, the rhombohedral crystalline configuration R allows a transition range between the configurations A and R that, unlike the range between the configurations A and M varying between 10°C and 30°C, is of about 2-3°C, being therefore reduced enough to ensure correct operation of an antifreeze device 1.

In addition, by suitably varying alloy and/or heat treatments it is possible to adjust the lower, intermediate and upper threshold values adapting them to the particular requirements of various fluids such as oil, antifreeze liquid or other fluids used in a cooling plant, piping plant or other liquid-movement plants.

Another advantage resides in that said materials and heat treatments define a favourable hysteresis cycle that, when the temperature decreases, allows the elasticity coefficient of the thermosensitive elastic means 52 to lower more quickly bringing about quick passage to the open configuration. On the contrary, when the temperature rises, a quicker increase of the elasticity coefficient of the thermosensitive elastic means 52 is achieved bringing about quick passage to the closed configuration.

In addition, due to the substantial coaxial character of means 52 and 53, device 1 has very reduced bulkiness.

Also important is the great construction simplicity resulting in reduced manufacturing costs of the antifreeze device 1.

The invention is susceptible of variations falling within the scope of the inventive idea. All elements described and claimed can be replaced by equivalent elements and the details, materials, shapes and sizes can be of any nature and magnitude.

## Claims

1. An antifreeze device (1) adapted to become operative depending on the freezing of a fluid, **characterised in that** it comprises thermosensitive elastic means (52) made of a shape memory material, having an elasticity coefficient (K) varying as a function of the temperature (T), so that, when said temperature (T) is substantially lower than a minimum threshold lower than or equal to a freezing temperature of said fluid, said means has a martensitic crystalline configuration (M) substantially defining a minimum elasticity coefficient, when said temperature (T) is substantially higher than a maximum threshold exceeding said freezing temperature, this means has an austenitic crystalline configuration (A) substantially defining a maximum elasticity coefficient, and **in that** said thermosensitive elastic means (52), when said temperature (T) is substantially included between said maximum threshold and minimum threshold, has an at least partially rhombohedral crystalline configuration (R) substantially defining an elasticity coefficient greater than said minimum elasticity coefficient.

2. An antifreeze device (1) as claimed in claim 1, wherein said thermosensitive elastic means (52), when said temperature (T) is substantially included between said maximum threshold and minimum threshold, has a partly rhombohedral (R) and partly austenitic (A) crystalline configuration.

3. An antifreeze device (1) as claimed in one or more of the preceding claims, wherein said thermosensitive elastic means (52), when it is in said at least partly rhombohedral crystalline configuration (R), has an elasticity coefficient (K) substantially included between said maximum elasticity coefficient and minimum elasticity coefficient.

4. An antifreeze device (1) as claimed in one or more of the preceding claims, wherein in said closed configuration the thermosensitive elastic means (52) is in said austenitic crystalline configuration (M), and wherein in said open configuration, the thermosensitive elastic means (52) is in said at least partly rhombohedral crystalline configuration (R).

5. An antifreeze device (1) as claimed in one or more of the preceding claims, comprising thermo-invariant elastic means (53) adapted to work in opposition to said thermosensitive elastic means (52) and **characterised by** an elasticity coefficient (K) substantially constant on varying of said temperature (T) and intermediate between said minimum and maximum elasticity coefficients of said thermosensitive elastic means (52).

6. An antifreeze device (1) as claimed in the preceding claim, wherein said elastic means (52, 53) consists of extension springs which are substantially coaxial with each other.

7. An antifreeze device (1) as claimed in one or more of the preceding claims, wherein said thermosensitive elastic means (52) is made of an alloy including titanium and nickel.

8. An antifreeze device (1) as claimed in the preceding claim, wherein said alloy comprises a nickel content expressed in atomic percent unit, substantially included between 49% and 51 %.

9. An antifreeze device (1) as claimed in claim 6, wherein said alloy is a ternary nickel-titanium-copper alloy.

10. An antifreeze device (1) as claimed in the preceding claim, wherein said alloy is Ni_{50-X}Ti₅₀Cu_{X} and wherein X, indicating the content expressed in atomic percent unit, is substantially included between 5% and 20%.
